# EUROPÄISCHE PATENTANMELDUNG

(11) **EP 1 744 077 A1**
(43) Veröffentlichungstag der Anmeldung: **17.01.2007**
(21) Anmeldenummer: 06013659.5
(22) Anmeldetag: 30.06.2006
(51) Int. Cl.: F16F 7/12, B62D 21/15

(54) **Hybrid-Verbindungselement**

(30) Priorität: 12.07.2005 DE 202005010964 U
(71) Anmelder: Jacob Composite GmbH, 91489 Wilhelmsdorf (DE)
(72) Erfinder: Wacker, Marco, 91452 Wilhermsdorf (DE); Russ, Jörg, 90518 Altdorf (DE)
(74) Vertreter: Herrmann, Uwe

(57) **Zusammenfassung**

Die Erfindung betrifft ein Hybrid-Verbindungselement insbesondere zur Aufnahme kinetischer Aufprallenergie und/oder zur Aufnahme der beim Abschleppen insbesondere von Fahrzeugen auftretenden Kräfte mit wenigstens einem Krafteinleitungselement (10,20), das Kraft in einem Energieaufnahmeelement (30) einleitet und/oder das Kraft aus einem Energieaufnahmeelement (30) in ein benachbartes Bauteil einleitet. Das Energieaufnahmeelement (30) nimmt die eingeleitete Kraft zumindest teilweise durch Verformung auf und steht mit dem Krafteinleitungselement in Verbindung, wobei die Verbindung zwischen dem Energieaufnahmeelement und dem Krafteinleitungselement form- und/oder kraftschlüssig und/oder derart ausgeführt ist, dass das Energieaufnahmeelement unter Vorspannung mit dem Krafteinleitungselement verbunden ist.

## Beschreibung

Die vorliegende Erfindung betrifft ein Hybrid-Verbindungselement insbesondere zur Absorption von Aufprallenergie und/oder zur Aufnahme der beim Abschleppen insbesondere von Kraftfahrzeugen auftretenden Kräfte.

Solche Hybrid-Verbindungselemente sind im Fahrzeugbau auch als Crash- oder Knautschelemente bekannt. Sie werden in Fahrzeugen in besonders gefährdeten Bereichen eingebaut, um einen wesentlichen Teil der bei einem Aufprall anfallenden Energie aufzunehmen und auch um die beim Abschleppen auftretenden Kräfte aufzunehmen, damit ein sicheres Abschleppen gewährleistet werden kann. Energieabsorptionselemente bzw. Hybrid-Verbindungselemente sind in zahlreichen unterschiedlichen Ausgestaltungen bekannt.

Aus der DE 2 158 086 ist ein Knautschelement bekannt, das aus einer Anzahl von Schichten, Lagen oder Reihen von bienenwabenartig oder wellenförmig angeordneten Einzelelementen besteht. Diese aus Pappe, Metall, Kunststoff, Gummi oder dergleichen aufgebauten Schichten, Lagen oder Reihen sind senkrecht zur Aufprallrichtung angeordnet. Aus der DE 42 02 589 C2 ist eine Sandwichstruktur bekannt, die aus einem textilen Vorformling besteht, der vor dem Aushärten eines Kunststoffes, mit dem der Vorformling imprägniert ist, mit seinen Decklagen zwischen einer steifen Grund- und Deckplatte positioniert wird. Sodann wird zum Zwecke der Verbindung zwischen den Decklagen des Vorformlings und der Grund- bzw. Deckplatte ein bestimmter Pressdruck ausgeübt. Anschließend wird der Abstand zwischen Grund- und Deckplatte bis zu einer bestimmten Ausrichtung der Fäden des Vorformlings verändert und es erfolgt schließlich die Aushärtung des Kunststoffes. Die DE 37 23 681 A1 offenbart ein Bauteil auf Velours-Gewebebasis, das eine gute Steifigkeit, Druckfestigkeit und Dämmwirkung und zudem ein geringes Gewicht aufweist, was für den Einsatz in Flugzeugen von Bedeutung ist. Das ausgehärtet verharzte Gewebe weist zwei Lagen auf, zwischen denen sich Stege erstrecken, die starre Beabstandungselemente zwischen den Lagen bilden. Das Gewebe besteht aus einem technischen Garn, wie beispielsweise Aramid, Kohlefaser, Keramikfaser oder Glasfaser. Die Stege haben die Eigenschaft, sich selbst nach dem Aufeinanderpressen der Lagen wieder aufzustellen, d.h. das Bauteil nimmt wieder seine ursprüngliche Form ein. Aus der EP 0 055 364 A1 ist ein Energieabsorptionselement zur Energieabsorption im Crashfall bekannt, das als offener Hohlkörper ausgeführt ist, dessen Mantelfläche durch ein Netz aus mindestens einem Faserverbundwerkstoff gebildet wird. Die Stranglagen des Faserverbundwerkstoffes sind in mehreren Lagen in positiver oder negativer Richtung zur Bauteillängsachse geneigt.

Vorbekannte Faserverbundwerkstoffe haben sehr gute Crasheigenschaften, d.h. sind zur Aufnahme der beim Aufprall entstehenden Energie sehr gut geeignet. Ein Problem besteht jedoch darin, dass sie sich nicht oder nur schwer ohne Zerstörung der Fasern an umgebende Strukturen insbesondere aus metallischen Werkstoffen anbinden lassen. Ein flächiges Anbinden wird derzeit über zusätzliche Fügeverfahren, wie z.B. Kleben, Schweißen oder Nieten realisiert.

Der vorliegenden Erfindung liegt die Aufgabe zugrunde, ein Hybrid-Verbindungselement der eingangs genannten Art bereitzustellen, das auf einfache Weise mit umgebende Strukturen verbunden werden kann.

Diese Aufgabe wird durch ein Hybrid-Verbindungselement mit den Merkmalen des Anspruchs 1 gelöst. Danach ist vorgesehen, dass das Hybrid-Verbindungselement wenigstens ein Krafteinleitungselement, das Kraft in das Hybrid-Verbindungselement einleitet und/oder aus diesem ableitet, sowie wenigstens ein Energieaufnahmeelement umfasst, das die eingeleitete Kraft durch Verformung aufnimmt und das mit dem Krafteinleitungselement in Verbindung steht, wobei die Verbindung zwischen dem Energieaufnahmeelement und dem Krafteinleitungselement form- oder kraftschlüssig und/oder derart ausgeführt ist, dass das Energieaufnahmeelement unter Vorspannung mit dem Krafteinleitungselement verbunden ist.

Dabei kann das wenigstens eine Krafteinleitungselement aus einem metallischen Werkstoff, insbesondere aus Stahl oder Aluminium, bestehen oder diesen aufweisen. Das Energieaufnahmeelement besteht vorzugsweise aus einem Faserverbundwerkstoff, vorzugsweise einem teilvernetzten duroplastischen Faserverbundwerkstoff oder einem thermoplastischen Faserverbundwerkstoff bzw. weist diese Werkstoffe auf.

Das erfindungsgemäße Hybrid-Verbindungselement verbindet die Vorteile unterschiedlicher Werkstoffe, wie beispielsweise die Eigenschaft von Faserverbundwerkstoffen, Energie aufzunehmen, und die Eigenschaft metallischer Werkstoffe, Kraft in das Hybrid-Verbindungselement bzw. in benachbarte Strukturen einzuleiten. Es handelt sich bei dem erfindungsgemäßen Hybrid-Verbindungselement vorzugsweise um einen Zug-Druck-Verbund.

Der erfindungsgemäße Verbund kann derart ausgeführt sein, dass der Zusammenhalt zwischen dem Energieaufnahmeelement und dem Krafteinleitungselement über eine Montage-Vorspannung und/oder mittels einer form- und/oder kraftschlüssigen Verbindung realisiert ist.

Zur Erzeugung der Vorspannung kann wenigstens ein Zuganker vorgesehen sein, der mit dem oder den Krafteinleitungselementen derart in Verbindung steht, dass das Energieaufnahmeelement unter Druckspannung steht. Bevorzugt ist es, wenn das Energieaufnahmeelement zwischen zwei Krafteinleitungselementen aufgenommen ist, die mittels eines oder vorzugsweise mehrerer Zuganker miteinander verspannt sind und in dem Energieaufnahmeelement somit eine Druckspannung hervorrufen. Der Zuganker kann als Seil, Stange, Bügel, Klammer oder Draht ausgeführt sein. Er kann aus Metall oder aus einem Faserverbundwerkstoff, wie z.B. aus Aramidfasern ausgeführt sein.

Besonders vorteilhaft ist es, wenn der oder die Zuganker derart angeordnet sind, dass das Energieaufnahmeelement bei Übertragung von Kräften in Querrichtung zur Längsachse des Energieaufnahmeelementes, wie sie beispielsweise beim Abschleppen unter einem Winkel von 30° oder gar 70° auftreten, gegen Wegrutschen stabilisiert und seitlich gestützt wird.

Es kann vorgesehen sein, dass der oder die Zuganker das Energieaufnahmeelement umgeben oder durchdringen. Das Energieaufnahmeelement kann als kompakter Körper oder auch als Hohlkörper ausgeführt sein. Auch beliebige andere Ausgestaltungen des Energieaufnahmeelementes sind möglich.

In weiterer Ausgestaltung der Erfindung sind zwei Krafteinleitungselemente vorgesehen, die das Energieaufnahmeelement zwischen sich aufnehmen.

Es kann vorgesehen sein, dass unter Aufbringen einer Vorspannung das Energieaufnahmeelement ein- oder zweiseitig flächig an das oder die Krafteinleitungselement angepresst wird. Dabei liegt die Vorspannkraft unterhalb des Versagensniveaus des Energieaufnahmeelementes. Durch das Aufbringen einer Vorspannkraft wird das Anspringverhalten des Energieaufnahmeelementes beim Aufprall derart reduziert, dass ein Kraftpeak verhindert werden kann und auf eine sogenannte Triggerung des Energieaufnahmeelementes verzichtet werden kann.

Vorzugsweise ist vorgesehen, dass das Energieaufnahmeelement mit seinen Stirnseiten an dem oder den Krafteinleitungselementen anliegt. Das Energieaufnahmeelement kann derart ausgeführt sein, dass dessen Stirnseiten senkrecht zu der Längsachse des Energieaufnahmeelementes verlaufen.

Die Form des Krafteinleitungselementes sowie des Energieaufnahmeelementes ist weitgehend beliebig. Denkbar ist, dass die Krafteinleitungselemente als Platten oder als Profile ausgestaltet sind. Das Energieaufnahmeelement kann als geschlossenes oder als offenes Profil ausgeführt sein. Das Energieaufnahmeelement kann rotationssymmetrisch oder auch nicht rotationssymmetrisch, beispielsweise als offenes flächiges Bauteil, z.B. als Hutprofil ausgeführt sein. Es kann aus mehreren Profilen zusammengesetzt sein.

Die Krafteinleitungselemente sind vorzugsweise derart ausgeführt, dass eine einfache Anbindung an benachbarte Strukturen, wie z.B. Quer- oder Längsträger möglich ist. Denkbar ist eine Montage bzw. Demontage mittels Stift- und Schraubenverbindungen.

Besonders vorteilhaft ist es, wenn das Krafteinleitungselement form- und/oder kraftschlüssig mit dem Energieaufnahmeelement derart in Verbindung steht, dass das Energieaufnahmeelement wenigstens abschnittsweise, vorzugsweise in seinen Endabschnitten, zweiseitig von Krafteinleitungselementen umgeben ist. Das Krafteinleitungselement kann zweiteilig ausgeführt sein bzw. zwei Abschnitte aufweisen und das Energieaufnahmeelement beispielsweise auf dessen Ober- und Unterseite oder auf dessen Innen- und Außenseite umgeben.

Denkbar ist, dass das Energieaufnahmeelement zwischen den Krafteinleitungselementen verpresst ist. Im Falle des Kraft- bzw. Reibschlusses wird der Verbund vorzugsweise dergestalt realisiert, dass die vorzugsweise metallischen Krafteinleitungselemente unter Druckbeaufschlagung, vorzugsweise mittels hochenergetischer Verfahren, wie Hochdruckumformung, Innenhochdruckumformung oder elektromagnetische Umformung am das Energieaufnahmeelement gepresst werden. Dabei wird das Energieaufnahmeelement von beiden Seiten flächig eingeklemmt.

Alternativ oder zusätzlich zu der genannten kraftschlüssigen Verbindung ist denkbar, dass das Energieaufnahmeelement in den Abschnitten, in denen das Energieaufnahmeelement von Krafteinleitungselementen umgeben ist, derart mitverformt wird, dass sich eine formschlüssige Verbindung zwischen beiden Bauteilen ergibt. Durch Mitverformen des Energieaufnahmeelementes kann alternativ oder zusätzlich zu dem Kraftschluss ein Formschluss zwischen Energieaufnahmeelement und Krafteinleitungselement ausgebildet werden.

Die formschlüssige Verbindung kann beispielsweise durch das Ausformen von Sikken, Rundungen oder Löchern und dergleichen unterschiedlicher Abmessungen bzw. Durchmesser gebildet werden. Um eine derartige Verformung des Energieaufnahmeelementes zu ermöglichen, muss dieses selbstverständlich formbar sein. Eine Formbarkeit ergibt sich beispielsweise dann, wenn es sich bei dem Energieaufnahmeelement um ein teilvernetztes duroplastisches Faserverbundbauteil oder um ein thermoplastisches Faserverbundbauteil handelt.

Im Falle eines theroplastischen Faserverbundbauteils ist unter Umständen eine entsprechende Vorheizung des Faserverbundbauteils erforderlich. Schmilzt dabei das Faserverbundbauteil stellenweise auf, so kann die entstehende Schmelze als zusätzliche Schmelzklebeschicht wirken und die Belastbarkeit der kraftschlüssigen bzw. formschlüssigen Verbindung verbessern.

In weiterer Ausgestaltung der Erfindung ist vorgesehen, dass das Energieaufnahmeelement wenigstens eine Stirnfläche aufweist, die mit dem Krafteinleitungselement verklebt ist, um auf diese Weise die Montage-Vorspannung zu verbessern. Vorzugsweise weist das Energieaufnahmeelement zwei Stirnflächen auf, von denen jede mit einem Krafteinleitungselement verklebt ist, wobei das Energieaufnahmeelement zwischen den Krafteinleitungselementen angeordnet ist.

Die Klebung kann durch thermoplastisches Schmelzkleben oder duroplastisches Reaktionskleben realisiert werden.

Darüber hinaus kann die Klebung dazu dienen, die oben genannte reibschlüssige und/oder formschlüssige Verbindung zu stabilisieren, indem Klebeschichten zwischen dem Krafteinleitungselement und dem Energieaufnahmeelement vorgesehen werden. Auch diese Klebung kann durch thermoplastisches Schmelzkleben oder duroplastisches Reaktionskleben realisiert werden. Im Falle eines thermoplastischen Faserverbundelementes kann die Schmelzklebung auch direkt durch Aufschmelzen realisiert werden.

Die Erfindung betrifft ferner ein Fahrzeug mit einem Hybrid-Verbindungselement. Vorzugsweise ist ein Fahrzeug mit einem Querträger und einem Längsträger vorgesehen, wobei sich zwischen dem Quer- und dem Längsträger ein Hybrid-Verbindungselement gemäß einem der Ansprüche 1 bis 17 befindet.

Weitere Einzelheiten und Vorteile der Erfindung werden anhand eines in der Zeichnung dargestellten Ausführungsbeispiels näher erläutert. Es zeigen:
- Fig. 1, 2:: perspektivische Darstellungen des erfindungsgemäßen Hybrid-Verbindungselementes in unterschiedlichen Ausführungen mit vorgespanntem Energieaufnahmeelement,
- Fig. 3 - 5:: perspektivische Darstellungen des erfindungsgemäßen Hybrid-Verbindungselementes in unterschiedlichen Ausführungen mit mittels Reib- und Formschluss fixiertem Energieaufnahmeelement und

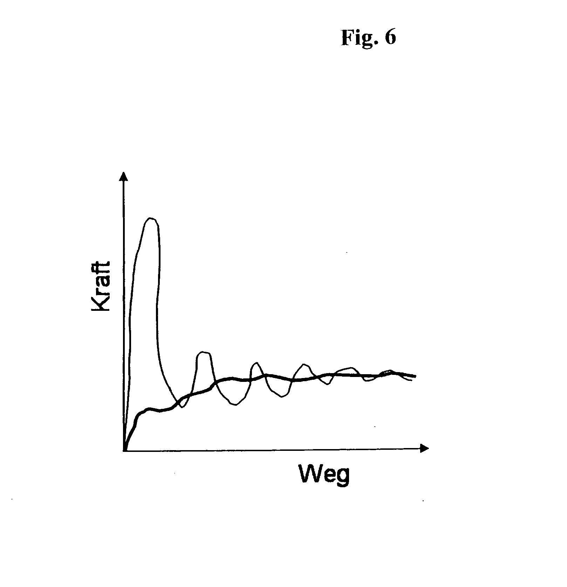

- Fig. 6:: Kraft - Weg - Diagramm für ein Hybrid-Verbindungselement gemäß dem Stand der Technik und gemäß der Erfindung.

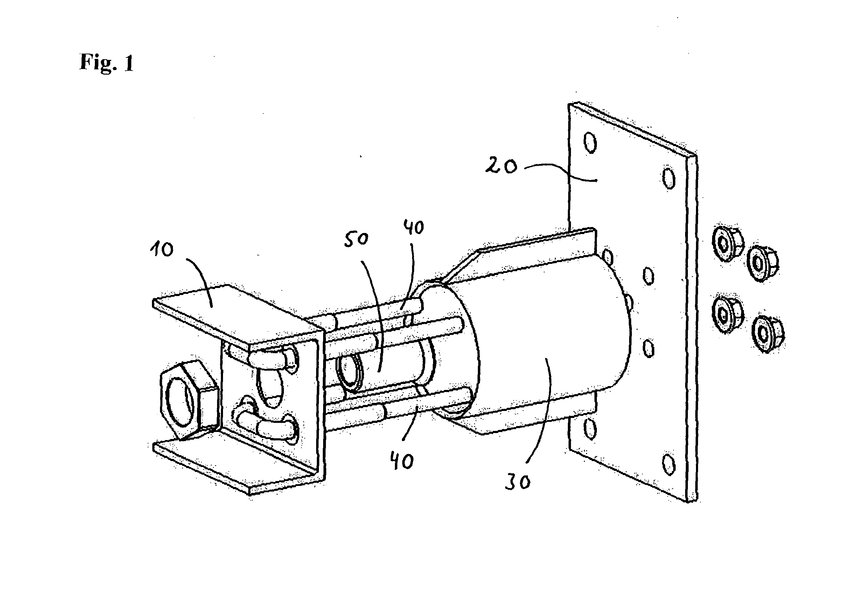

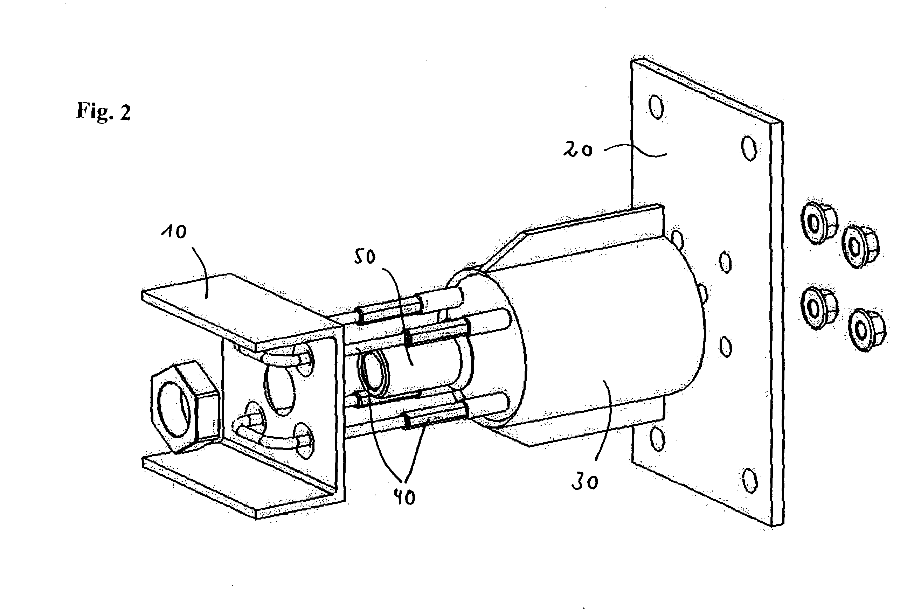

Die Figuren 1 und 2 zeigen Energieabsorptionselemente bzw. Hybrid-Verbindungselemente gemäß der vorliegenden Erfindung. Sie bestehen aus einem Zug-Druck-Verbund aus unterschiedlichen Werkstoffen. Die Krafteinleitungselemente 10, 20 bestehen aus Metall, vorzugsweise aus Stahl oder aus Aluminium.

Das Krafteinleitungselement 10 weist die Form eines U-Profils und das Krafteinleitungselement 20 die Form einer ebenen Platte auf.

Die Krafteinleitungselemente 10, 20 sind derart ausgeführt, dass eine einfache Anbindung an Quer- und Längsträger eines Fahrzeuges möglich ist. Denkbar sind beispielsweise Stift- und Schraubenverbindungen.

Zwischen den Krafteinleitungselementen 10, 20 erstreckt sich das im wesentlichen als Hohlzylinder ausgeführte Energieaufnahmeelement 30, das aus einem Faserverbundwerkstoff besteht und das auf seiner Außenseite nach außen ragende, sich in Längsrichtung erstreckende Rippen aufweist. Im montierten Zustand liegt das Energieaufnahmeelement 30 mit seinen Stirnseiten an den Krafteinleitungselementen 10, 20 flächig an. Die Stirnseiten können mit den Krafteinleitungselementen 10, 20 verklebt sein.

Zwischen den Krafteinleitungselementen 10, 20 erstrecken sich zwei Zuganker 40, die jeweils U-förmig ausgeführt sind. Jeder der Zuganker 40 durchläuft mit seinen Schenkeln je zwei Bohrungen des Krafteinleitungselementes 10, wie dies aus den Figuren 1 und 2 hervorgeht. In dem Bereich zwischen den Bohrungen stützt sich der Zuganker 40 mit seinem die Schenkel verbindenden Abschnitt an dem Krafteinleitungselement 10 ab. Die Zuganker 40 erstrecken sich durch den Hohlraum des Energieaufnahmeelementes 30. In dem anderen Endbereich weisen die Schenkel der Zuganker 40 Gewindeabschnitte auf, die im montierten Zustand des Energieabsorptionselementes durch Bohrungen des Krafteinleitungselementes 20 ragen. Die Gewindeabschnitte werden mittels Muttern verschraubt, so dass die Zuganker 40 auch relativ zu dem Krafteinleitungselement 20 fixiert sind. Durch Verschrauben der Muttern mit den Gewindeabschnitten wird eine Zugspannung auf die Zuganker 40 und dabei eine Druckspannung auf das Energieaufnahmeelement 30 aufgebracht, das zwischen den Krafteinleitungselementen 10, 20 eingepresst wird, so dass sich zwischen den Stirnseiten des Energieaufnahmeelementes 30 und den Krafteinleitungselementen 10, 20 eine reibschlüssige Verbindung ergibt.

Das Krafteinleitungselement 10 weist eine weitere Bohrung auf, durch die sich das zylindrische Bauteil 50 erstreckt, das ein Außengewinde aufweist. Das Bauteil 50 weist einen Abschnitt größeren Außendurchmessers auf, mit dem das Bauteil 50 an der Bohrung des Krafteinleitungselementes 10 anliegt. Das Bauteil 50 dient zur Aufnahme eines Abschlepphakens oder einer anderen Abschleppeinrichtung in seinem sich in Längsrichtung erstreckenden Hohlraum.

Die anzulegende, durch die Zuganker 40 erzeugte Vorspannkraft liegt unterhalb des Versagensniveaus des Faserverbundelementes 30. Durch die angelegte Vorspannkraft wird das Anspringverhalten des Faserverbundwerkstoffes bzw. -bauteils im Belastungsfall, d.h. beim Crash, derart reduziert, dass ein Kraftpeak vermieden wird, wie dies aus Figur 7 hervorgeht. Figur 7 zeigt den Kraft-Weg-Verlauf bei einem Energieabsorptionselement gemäß dem Stand der Technik (dünne Linie), aus dem deutlich wird, dass zunächst eine erhebliche Kraft aufzuwenden ist, um das Energieabsorptionselement zu verformen. Dies gilt nicht für das Energieabsorptionselement bzw. Hybrid-Verbindungselemente gemäß der Erfindung (fette Linie), das einen im wesentlichen kontinuierlich ansteigenden Verlauf der Kraft mit dem Verformungsweg aufweist.

Wie dies aus den Figuren 1 und 2 hervorgeht, sind die Zuganker 40 derart angeordnet, dass sie durch den Hohlraum des Faserverbundbauteils 30 laufen. Denkbar wäre grundsätzlich auch, dass die Zuganker 40 das Faserverbundbauteil 30 umgeben. Durch derartige Ausführungen lässt sich der Vorteil erzielen, dass das Faserverbundbauteil 30 auch bei möglichen Querkräften, wie z.B. beim Abschleppen unter einem Winkel von beispielsweise 30° bis 70° gegen Wegrutschen stabilisiert ist und seitlich, d.h. in Richtung senkrecht zu seiner Längsachse durch die Zuganker 40 mechanisch gestützt wird.

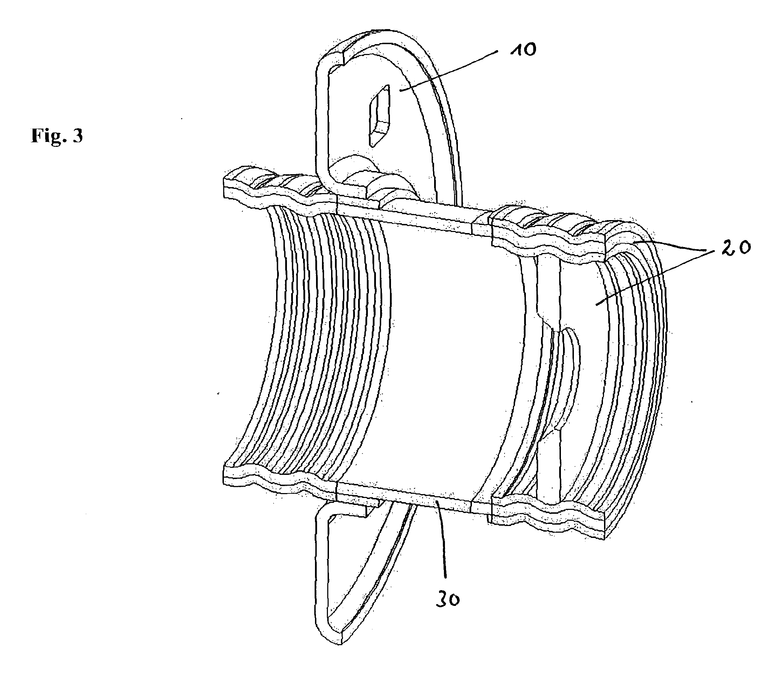

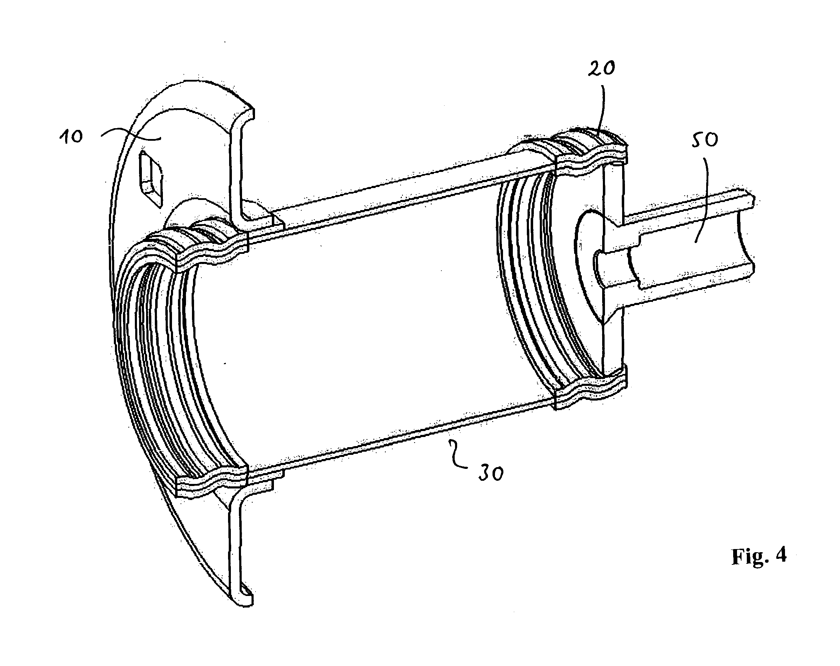

Die Figuren 3 und 4 zeigen Hybrid-Verbindungselemente gemäß der Erfindung, bei denen die Verbindung zwischen Energieaufnahmeelement 30 und Krafteinleitungselement 10, 20 durch Form- und Kraftschluss realisiert ist. Die verwendeten Materialien entsprechen denen zu Figur 1 und 2 erläuterten.

In seinen beiden Endbereichen ist das Energieaufnahmeelement 30 auf seiner innen- und außenliegenden Umfangsfläche zwischen dem Krafteinleitungselement 10 bzw. 20 verpresst. Die Krafteinleitungselemente 10, 20 sind jeweils zweiteilig ausgeführt und weisen ein innenliegendes und ein außenliegendes Teil auf, dass auf der Innen- bzw. Außenseite des Energieaufnahmeelementes 30 flächig anliegt. Dabei wird das Energieaufnahmeelement 30 beidseitig von Krafteinleitungselementen umgeben, von denen eines auf der Innenseite des Energieaufnahmeelementes 30 und eines auf dessen Außenseite angeordnet ist. Die Pressung zwischen den Bauteilen 10 bzw. 20 und 30 erfolgt dabei derart, dass sich eine kraftschlüssige Verbindung ergibt. Dabei ist der Kraftschluss derart modifiziert, dass zusätzlich eine formschlüssige Verbindung erhalten wird. Dies wird dadurch erreicht, dass Sicken, Rundungen etc. in die Kraftaufnahmeelemente 10, 20 sowie in das Energieaufnahmeelement eingeformt werden, die das Energieaufnahmeelement 30 relativ zu den Krafteinleitungselementen 10, 20 fixieren.

Wie dies aus den Figuren 3 und 4 hervorgeht, sind das Energieaufnahmeelement 30 sowie die Krafteinleitungselemente 10, 20 zylindrisch ausgestaltet. Bei dem rechts dargestellten Krafteinleitungselement 20 ist an dem innenliegenden Teil ein zylindrisches Bauteil 50 angeformt, dessen Innenraum zur Aufnahme eines Abschlepphakens dient. Das links dargestellte Krafteinleitungselement 10 weist an seinem außenliegenden Teil einen Flansch auf, der zur Befestigung des Hybrid-Verbindungselementes an einem weiteren Bauteil dient.

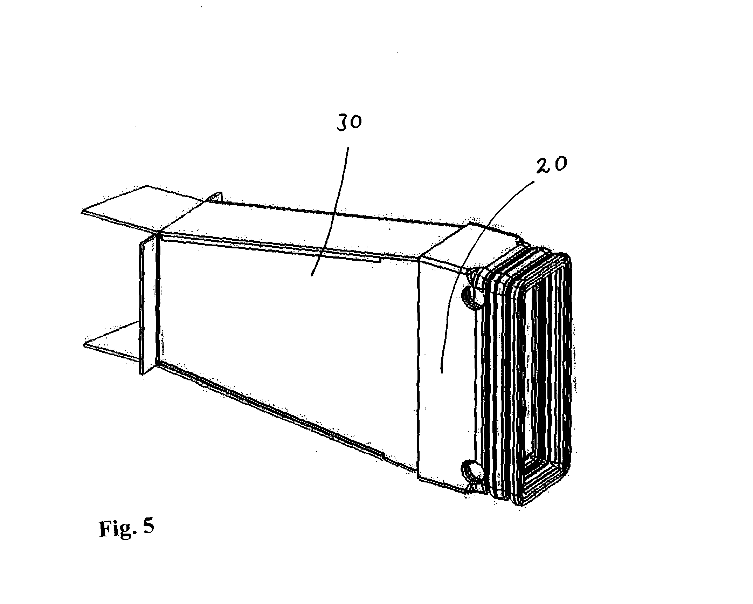

Figur 5 zeigt ein weiteres Ausführungsbeispiel einer kraftschlüssigen Verbindung mit einem konisch zulaufenden kastenförmigen Energieaufnahmeelement 30. Hinsichtlich der Form des Energieaufnahmeelementes sowie des Krafteinleitungselementes gibt es keinerlei Beschränkungen.

## Patentansprüche

1. Hybrid-Verbindungselement insbesondere zur Aufnahme kinetischer Aufprallenergie und/oder zur Aufnahme der beim Abschleppen insbesondere von Fahrzeugen auftretenden Kräfte mit wenigstens einem Krafteinleitungselement, das Kraft in das Hybrid-Verbindungselement einleitet und/oder das Kraft aus dem Hybrid-Verbindungselement in ein benachbartes Bauteil einleitet, sowie mit wenigstens einem Energieaufnahmeelement, das die eingeleitete Kraft zumindest teilweise durch Verformung aufnimmt und das mit dem Krafteinleitungselement in Verbindung steht, wobei die Verbindung zwischen dem Energieaufnahmeelement und dem Krafteinleitungselement form- und/oder kraftschlüssig und/oder derart ausgeführt ist, dass das Energieaufnahmeelement unter Vorspannung mit dem Krafteinleitungselement verbunden ist.

2. Hybrid-Verbindungselement nach Anspruch 1, **dadurch gekennzeichnet, dass** das Krafteinleitungselement aus einem metallischen Werkstoff, insbesondere aus Stahl und/oder Aluminium besteht oder diesen aufweist.

3. Hybrid-Verbindungselement nach Anspruch 1 oder 2, **dadurch gekennzeichnet, dass** das Energieaufnahmeelement ein Faserverbundbauteil, vorzugsweise ein teilvernetztes duroplastisches Faserverbundbauteil oder ein thermoplastisches Faserverbundbauteil ist oder ein solches aufweist.

4. Hybrid-Verbindungselement nach einem der vorhergehenden Ansprüche, **dadurch gekennzeichnet, dass** wenigstens ein Zuganker vorgesehen ist, der mit dem oder vorzugsweise den Krafteinleitungselementen derart in Verbindung steht, dass das Energieaufnahmeelement unter Druckspannung steht.

5. Hybrid-Verbindungselement nach Anspruch 4, **dadurch gekennzeichnet, dass** der Zuganker als Seil, Stange, Bügel, Klammer oder Draht, vorzugsweise aus Metall oder einem Faserverbundwerkstoff ausgeführt ist.

6. Hybrid-Verbindungselement nach einem der Ansprüche 4 oder 5, **dadurch gekennzeichnet, dass** der oder vorzugsweise die Zuganker derart angeordnet sind, dass das Energieaufnahmeelement insbesondere bei der Übertragung von Kräften in Querrichtung zur Längsachse des Energieaufnahmeelementes durch die Zuganker mechanisch gestützt wird.

7. Hybrid-Verbindungselement nach einem der Ansprüche 4 bis 6, **dadurch gekennzeichnet, dass** der oder die Zuganker das Energieaufnahmeelement umgeben oder sich durch das Energieaufnahmeelement erstrecken.

8. Hybrid-Verbindungselement nach einem der vorhergehenden Ansprüche, **dadurch gekennzeichnet, dass** zwei Krafteinleitungselemente vorgesehen sind, die das Energieaufnahmeelement zwischen sich aufnehmen.

9. Hybrid-Verbindungselement nach einem der vorhergehenden Ansprüche, **dadurch gekennzeichnet, dass** das Energieaufnahmeelement eine Längsachse aufweist und dass sich die Flächen der Krafteinleitungselemente, an denen das Energieaufnahmeelement mit seinen Stirnseiten anliegt, senkrecht zur Längsachse des Energieaufnahmeelementes erstrecken.

10. Hybrid-Verbindungselement nach einem der vorhergehenden Ansprüche, **dadurch gekennzeichnet, dass** das Energieaufnahmeelement als geschlossenes oder als offenes Profil ausgeführt ist.

11. Hybrid-Verbindungselement nach einem der vorhergehenden Ansprüche, **dadurch gekennzeichnet, dass** das Krafteinleitungselement form- und/oder kraftschlüssig mit dem Energieaufnahmeelement derart in Verbindung steht, dass das Energieaufnahmeelement wenigstens abschnittsweise, vorzugsweise in seinen Endabschnitten, zweiseitig von dem Krafteinleitungselement umgeben ist.

12. Hybrid-Verbindungselement nach Anspruch 11, **dadurch gekennzeichnet, dass** das Krafteinleitungselement das Energieaufnahmeelement auf dessen Ober- und Unterseite bzw. auf dessen Innen- und Außenseite umgibt.

13. Hybrid-Verbindungselement nach Anspruch 11 oder 12, **dadurch gekennzeichnet, dass** das Energieaufnahmeelement zwischen den Bestandteilen des Krafteinleitungselementes verpresst ist.

14. Hybrid-Verbindungselement nach einem der Ansprüche 11 bis 13, **dadurch gekennzeichnet, dass** das Energieaufnahmeelement und/oder das Krafteinleitungselement in den Abschnitten, in denen das Energieaufnahmeelement von dem Krafteinleitungselement umgeben ist, derart verformt ist, dass sich eine formschlüssige Verbindung zwischen beiden Bauteilen ergibt.

15. Hybrid-Verbindungselement nach Anspruch 14, **dadurch gekennzeichnet, dass** die formschlüssige Verbindung durch Sicken, Rundungen oder Löcher realisiert ist.

16. Hybrid-Verbindungselement nach einem der vorhergehenden Ansprüche, **dadurch gekennzeichnet, dass** das Energieaufnahmeelement wenigstens eine Fläche aufweist, die mit dem Krafteinleitungselement verklebt ist.

17. Hybrid-Verbindungselement nach einem der vorhergehenden Ansprüche, **dadurch gekennzeichnet, dass** ein Krafteinleitungselement mit Mitteln zur Aufnahme einer Vorrichtung zum Abschleppen eines Fahrzeuges ausgeführt ist.

18. Hybrid-Verbindungselement nach Anspruch 17, **dadurch gekennzeichnet, dass** die Mittel zur Aufnahme der Vorrichtung eine Hülse zur Aufnahme eines Abschlepphakens aufweisen.

19. Fahrzeug mit einem Hybrid-Verbindungselement nach einem der Ansprüche 1 bis 18.

20. Fahrzeug nach Anspruch 19 mit einem Querträger und einem Längsträger, **dadurch gekennzeichnet, dass** sich zwischen dem Quer- und dem Längsträger ein Hybrid-Verbindungselement gemäß einem der Ansprüche 1 bis 18 befindet.
